(19) Europäisches Patentamt / European Patent Office / Office européen des brevets

(11) **EP 2 628 857 A1**

(12) **EUROPEAN PATENT APPLICATION**
published in accordance with Art. 153(4) EPC

(43) Date of publication:
**21.08.2013 Bulletin 2013/34**

(21) Application number: **11832446.6**

(22) Date of filing: **04.10.2011**

(51) Int Cl.:
*E02F 9/20* (2006.01)     *H02J 7/34* (2006.01)

(86) International application number:
**PCT/JP2011/072892**

(87) International publication number:
**WO 2012/050010 (19.04.2012 Gazette 2012/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.10.2010 JP 2010231086**

(71) Applicant: **Hitachi Construction Machinery Co., Ltd.**
**Bunkyo-ku**
**Tokyo 112-8563 (JP)**

(72) Inventors:
• **IZUMI Shiho**
  **Hitachi-shi**
  **Ibaraki 319-1292 (JP)**
• **ISHIDA Seiji**
  **Hitachi-shi**
  **Ibaraki 319-1292 (JP)**

• **KAJITA Yusuke**
  **Tsuchiura-shi**
  **Ibaraki 300-0013 (JP)**
• **SATAKE Hidetoshi**
  **Tsuchiura-shi**
  **Ibaraki 300-0013 (JP)**
• **EDAMURA Manabu**
  **Tsuchiura-shi**
  **Ibaraki 300-0013 (JP)**
• **FUJISHIMA Kazuo**
  **Tsuchiura-shi**
  **Ibaraki 300-0013 (JP)**
• **SASAKI Masataka**
  **Hitachi-shi**
  **Ibaraki 319-1292 (JP)**

(74) Representative: **Beetz & Partner**
**Patentanwälte**
**Steinsdorfstrasse 10**
**80538 München (DE)**

(54) **CONSTRUCTION MACHINE**

(57)     An object of the present invention is to provide a construction machine that is capable of effectively charging electrical power into the capacitor in consideration of the drive of a swing section and hydraulic work device. To achieve the object, the present invention grasps the status of the construction machine (2) in advance to calculate energy, predicts the next operation, determines the amount of energy to be charged into a capacitor (13), and controls a DC-DC converter (15) accordingly. Consequently, the loss in a conventional battery (lead storage battery) during regeneration can be reduced to provide increased efficiency.

FIG.2

EP 2 628 857 A1

## Description

Technical Field

The present invention relates to a construction machine having an engine and a power supply system.

Background Art

In the past, construction machines such as a hydraulic excavator drove a hydraulic pump with the output torque of an engine to drive a hydraulic work device (a bucket cylinder, an arm cylinder, or a boom cylinder).

In recent years, a hybrid construction machine having, for example, an engine, a power generator (motor-generator), an electric motor (AC motor), and an electrical storage device (battery) has been proposed in order to provide improved fuel economy, reduce emissions, and reduce noise.

For example, the battery is charged under light load conditions with electrical power generated by the power generator and with regenerative power obtained from braking, and the charged electrical power is discharged from the battery and used under heavy load conditions.

Especially in the case of a hybrid construction machine that uses a lead battery, the lead battery is not efficiently charged with the regenerative power obtained from braking because the regeneration efficiency of the lead battery is low.

A technology described, for instance, in JP-A-1997-224302 relates to a hybrid vehicle and provides improved regeneration efficiency. More specifically, the regeneration efficiency is improved by configuring a power supply system having a lead battery and a capacitor, using the capacitor to store energy, and supplying the stored energy to a load. The technology described in JP-A-1997-224302 also detects the speed of the vehicle and changes the target electrical storage ratio of the capacitor in accordance with the vehicle speed for the purpose of exercising control to increase the target voltage of the capacitor when the vehicle speed is low and decrease the target voltage of the capacitor when the vehicle speed is high.

Another technology described, for instance, in JP-A-1999-164402 selects a relatively high charge state for an electrical storage section when the speed of a hybrid vehicle is low and selects a relatively low charge state for the electrical storage section when the speed of the hybrid vehicle is high.

Still another technology described, for instance, in JP-A-2002-359935 relates to a hybrid work machine and appropriately changes a charge/discharge threshold value for an electrical storage section. More specifically, this technology selects a low charge/discharge threshold value for the electrical storage section when kinetic energy and potential energy are high and selects a high charge/discharge threshold value for the electrical storage section when the kinetic energy and potential energy are low.

Prior Art Literature

Patent Documents

Patent Document 1: JP-1997-224302-A
Patent Document 2: JP-1999-164402-A
Patent Document 3: JP-2002-359935-A

Summary of the Invention

Problem to be Solved by the Invention

In general, a vehicle is electrified by electrifying its travel section.

However, when a construction machine is to be electrified, it involves not only its travel section but also a system that drives a swing section and a hydraulic work device by using hydraulic pressure or by using electrical power stored in a battery or in a capacitor.

More specifically, the construction machine is electrified by using an AC motor to drive a swing structure and by using a motor-generator to assist the drive of a hydraulic pump for driving the hydraulic work device.

As described above, when the construction machine is to be electrified, the target of electrification is not limited to its travel section. Further, charge/discharge control for the battery and for the capacitor is not simple, but the drives of the swing section and of the hydraulic work device need to be taken into consideration.

Moreover, in a system that uses both the capacitor and the battery, the capacitor needs to be effectively charged with electrical power.

The present invention has been made in view of the above circumstances and provides a construction machine that is capable of effectively charging the capacitor with electrical power in consideration of the drive of the swing section and hydraulic work device.

Means for Solving the Problem

According to one aspect of the present invention, there is provided a construction machine including an engine, a hydraulic pump, a motor-generator, a hydraulic work device such as a bucket cylinder, an arm cylinder, or a boom cylinder, a swing structure, an AC motor, and a power supply system, and a controller. The hydraulic pump is driven by the engine. The motor-generator is coupled to the engine and to the hydraulic pump and capable of generating electrical power. The hydraulic work device is driven by a hydraulic fluid discharged from the hydraulic pump. The swing structure is a structure on which the hydraulic work device is mounted. The AC motor drives the swing structure. The power supply system includes a capacitor and battery that supply electrical power to the motor-generator and/or the AC motor (preferably the AC motor) and become charged with electrical power regenerated by the motor-generator and/or the AC motor (preferably the AC motor). A lead battery or a lithium-ion battery may be used as the battery. However, it is particularly preferred that a lead battery be used as the battery. The controller controls the power supply system.

It is preferred that the controller include an motion estimation section, an energy calculation section, and a capacitor control section. The motion estimation section estimates the next motion of the hydraulic work device and/or the swing structure (preferably the next operation of the swing structure) in accordance, for instance, with the current operation by an operator and with measured load. The energy calculation section calculates the amount of electrical power to be regenerated by the motor-generator and/or the AC motor (preferably the AC motor) in accordance with the estimated next operation. The capacitor control section sets a target voltage for the capacitor in accordance with the calculated amount of electrical power.

It is preferred that the controller include a body control section that calculates the amount of electrical power to be requested from the hydraulic work device and/or the swing structure (preferably the swing structure) in accordance with the current operation by the operator.

It is preferred that the capacitor control section include a capacitor status detection section, a capacitor charge/discharge command calculation section, and a capacitor target voltage setup section. The capacitor status detection section detects the current voltage of the capacitor. The capacitor charge/discharge command calculation section calculates a charge/discharge command for the capacitor in accordance with the calculated amount of electrical power and with the detected current voltage. The capacitor target voltage setup section sets a target voltage for the capacitor in accordance with the calculated charge/discharge command.

It is preferred that the capacitor control section be capable of correcting the target voltage for the capacitor in accordance with the rotation speed of the engine, a torque command for the AC motor, and/or a torque command for the motor-generator.

According to another aspect of the present invention, there is provided a construction machine including a power supply system and a controller. The power supply system includes a capacitor and battery that supply electrical power to an AC motor for driving a swing structure and that become charged with electrical power regenerated by a motor-generator and/or by the AC motor. The swing structure is a structure on which the motor-generator and/or a hydraulic cylinder are mounted. The motor-generator is coupled to an engine and to a hydraulic pump and capable of generating electrical power. The hydraulic cylinder is driven by a hydraulic fluid discharged from the hydraulic pump. The controller controls the power supply system.

A lead battery or a lithium-ion battery may be used as the battery. However, it is particularly preferred that a lead battery be used as the battery.

When the electrical power is to be supplied to the motor-generator and/or the AC motor and the electrical power regenerated by the motor-generator and/or the AC motor is used for charging, it is preferred that the electrical power be supplied to the AC motor, and that the electrical power regenerated by the AC motor be used for charging.

It is preferred that the controller estimate the next operation of the hydraulic work device and/or the swing structure in accordance, for instance, with the current operation by an operator and with measured load, calculate the amount of electrical power to be regenerated by the motor-generator and/or the AC motor (preferably the AC motor) in accordance with the estimated next operation, and set a target voltage for the capacitor in accordance with the calculated amount of electrical power.

It is preferred that the controller create a charge/discharge command for the capacitor in accordance with the calculated amount of electrical power and set the target voltage for the capacitor in accordance with the created charge/discharge command.

Further, the controller calculates the amount of electrical power in accordance with the rotation speed of the AC motor, namely, in accordance with a physical quantity that varies, for instance, with the current operation by the operator and with the measured load.

The amount of electrical power can also be calculated by using the amount of energy.

It is particularly preferred that the controller compare the current voltage of the capacitor to the target voltage of the capacitor. If the current voltage of the capacitor is higher than the target voltage of the capacitor, it is particularly preferred that the controller supply electrical power by discharging the capacitor.

Either the motor-generator or the AC motor is to be discharged. However, it is particularly preferred that the AC motor be discharged.

A process performed by the controller to estimate the next operation of the hydraulic work device or of the swing structure in accordance, for instance, with the current operation by the operator and with the measured load will now be described.

The hydraulic work device or the swing structure is driven in accordance, for instance, with a lever operation performed by the operator. In other words, when the amount of lever operation performed by the operator (a lever operation signal) is detected, the drive amount of the hydraulic work device or of the swing structure can be estimated.

The motion (drive) of a construction machine is substantially limited to a drive for construction work. Therefore, the next operation of the hydraulic work device or of the swing structure can be estimated in accordance with the estimated drive (drive amount) of the hydraulic work device or of the swing structure. In accordance with the next operation of the hydraulic work device or of the swing structure, the amount of electrical power to be regenerated by the motor-generator or by the AC motor is estimated.

To efficiently charge the battery or the capacitor with required electrical power or efficiently discharge the battery or the capacitor for acquiring required electrical power, it is necessary to control an electrical storage ratio in advance.

As such being the case, the present invention predicts the next operation from the current operation of the construction machine, uses the current information about a vehicle body to calculate the electrical power for power generation or drive to be provided for the next operation by the AC motor or the motor-generator, calculates a target voltage for charging the battery and the capacitor in accordance with the calculated electrical power, and performs a charge/discharge process in advance to obtain the target voltage.

Predicting the next operation from the current operation is peculiar to construction machines. In other words, it is necessary to consider not only the drive of a travel section but also the drive of a swing section and hydraulic work device.

If, for instance, the current operation is a swing section power running operation, it is predicted that the next operation will be a swing section regeneration operation. If, on the other hand, the rotation speed of the engine is low for the current operation, it is estimated that an idling state prevails or that front work is under light load conditions. In this instance, therefore, it is predicted that the next operation will be a power running operation.

In other words, the present invention calculates from the current operation the electrical power for power generation or for drive to be provided for the next operation by the AC motor or the motor-generator. This makes it possible to calculate in advance the amount of electrical power to be charged into or discharged from the capacitor or the battery.

Advantages of the Invention

The present invention, which has been described above, provides a construction machine that is capable of charging electrical power into the capacitor effectively with high energy efficiency in consideration of the drive of the swing section and hydraulic work device.

Brief Description of Drawings

Fig. 1 is a diagram illustrating the configuration of a hydraulic excavator to which an embodiment of the present invention is applied.

Fig. 2 is a diagram illustrating the system configuration of the hydraulic excavator.

Fig. 3 is a schematic diagram illustrating the control logic of a controller.

Fig. 4 is a diagram illustrating the control logic of a capacitor control section.

Fig. 5 is a diagram illustrating the relationship between swing lever pilot pressure, swing structure speed, energy E, capacitor voltage, and time.

Fig. 6 is a diagram illustrating an exemplary power flow of a swing section power running operation.

Fig. 7 is a diagram illustrating an exemplary power flow of a swing section regeneration operation.

Mode for Carrying Out the Invention

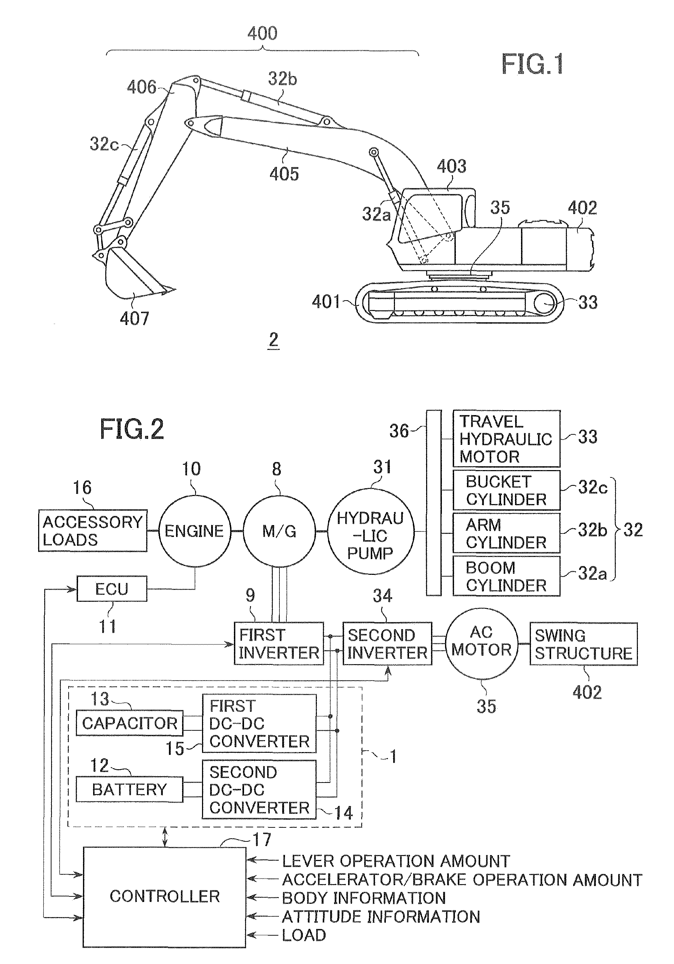

An embodiment of the present invention will now be described with reference to Figs. 1 to 7.

Fig. 1 is a diagram illustrating the configuration of a hydraulic excavator (a representative example of a construction machine) to which the present embodiment is applied.

Referring to Fig. 1, the hydraulic excavator 2 includes a travel structure 401 and a swing structure 402.

The travel structure 401 is driven by a travel hydraulic motor 33.

The swing structure 402 is driven by an AC motor 35 and formed turnably with respect to the travel structure 401.

A cab seat 403 is disposed on one side of the front of the swing structure 402 (e.g., on the left side as viewed from the back of the hydraulic excavator 2). A multijoint work section 400, which includes a boom 405, an arm 406, and a bucket 407, is disposed on the other side of the front of the swing structure 402 (e.g., on the right side as viewed from the back of the hydraulic excavator 2).

The boom 405, the arm 406, and the bucket 407 are respectively driven by a boom cylinder 32a, an arm cylinder 32b, and a bucket cylinder 32c.

Fig. 2 is a diagram illustrating the system configuration of the hydraulic excavator.

Referring to Fig. 2, a system for the hydraulic excavator includes an engine 10, a motor-generator (M/G) 8, and a first inverter (INV) 9. The engine 10 is controlled by an engine controller (ECU) 11. The motor-generator (M/G) 8 is coupled to the engine 10 and to a hydraulic pump 31 and capable of generating electrical power. The first inverter (INV) 9 is connected to the motor-generator (M/G) 8 in order to control motive power generated by the motor-generator (M/G) 8.

During power running, the motor-generator (M/G) 8 assists the engine 10 and drives the hydraulic pump 31, an air conditioner, and other accessory loads 16 connected to the engine 10. During regeneration, the motor-generator (M/G) 8 generates electrical power.

The generated electrical power (energy) is converted to a DC current by the first inverter 9 and supplied to a power supply system 1. The generated electrical power can be consumed by the swing structure 402. However, it is preferred that the generated electrical power be charged into a capacitor 13 in a power supply system 1.

The first inverter 9 converts DC power to AC power and converts AC power to DC power.

The system for the hydraulic excavator also includes the hydraulic pump 31 and a control valve 36. The control valve 36 drives a front work device 32 and the travel hydraulic motor 33 by controlling the flow of a hydraulic fluid supplied from the hydraulic pump 31.

The control valve 36 controls the flow of the hydraulic fluid supplied from the hydraulic pump 31 to supply the hydraulic fluid to the boom cylinder 32a, to the arm cylinder 32b, to the bucket cylinder 32c, and to the travel hydraulic motor 33.

The front work device (hydraulic work device) 32 includes the boom cylinder 32a, the arm cylinder 32b, and the bucket cylinder 32c and is mounted on the swing structure 402.

The swing structure 402 is connected to the AC motor 35. The AC motor 35 drives the swing structure 402.

Further, the AC motor 35 is connected to a second inverter (INV) 34. The second inverter (INV) 34 drives the AC motor 35.

The swing structure 402 includes a speed reducer. The speed reducer drives the swing structure 402 by increasing the speed of the shaft output of the AC motor 35. The AC motor 35 is a motor-generator. During power running, the AC motor 35 acts as a motor (electric motor) to generate a driving force. When the swing structure 402 is braked, the AC motor 35 acts as a generator (power generator) to regenerate electrical power.

The second inverter 34 converts DC power to AC power and converts AC power to DC power.

The system for the hydraulic excavator further includes the power supply system 1.

The power supply system 1 includes a battery 12, the capacitor 13, a first DC-DC converter 15 connected to the battery 12, and a second DC-DC converter 14 connected to the capacitor 13. The battery 12 and the capacitor 13 are electrical storage devices that store electrical energy.

A lead storage battery having a voltage between 170 V and 360 V is used as the battery 12. A lithium-ion battery may be used in place of the lead storage battery.

It is assumed that the capacitor 13 is an electric double layer capacitor and has a voltage of approximately 400 V and a capacitance of approximately 1000 F. When a 240 V lead storage battery is used as the battery 12, it is necessary that the capacity of the capacitor 13 be approximately 120 Ah although it depends on the work amount of the construction machine and the number of daily working hours.

The first DC-DC converter 15 and the second DC-DC converter 14 are step-up/step-down choppers and act as a DC power converter for performing power conversion between the inverters and electrical storage devices by controlling its output in accordance with the amount of electrical power (energy) input into and output from the power supply system 1 so that a DC bus voltage is developed between the battery 12 and the capacitor 13.

The first DC-DC converter 15 performs power conversion between the capacitor 13, the first inverter 9, and the second inverter 34. The second DC-DC converter 14 performs power conversion between the battery 12, the first inverter 9, and the second inverter 34.

In other words, the power supply system 1 includes the electrical storage devices (capacitor 13 and battery 12) and the power converters (first DC-DC converter 15 and second DC-DC converter 14) that perform power conversion between a direct current and an alternating current.

A controller 17 calculates the electrical current to be charged into or discharged from the electrical storage devices (capacitor 13 and battery 12) and controls the power converters (first DC-DC converter 15 and second DC-DC converter 14) in accordance with the result of the calculation.

It should be noted that a current operation performed by an operator, body information, and load are input into the controller 17.

The amounts of lever, accelerator, and brake operations performed at the cab seat 403 are input as the operator's current operation. The speed and acceleration of the travel structure 401 and the information about the swing structure 402, such as its turning speed and the attitude information about a work section 400, are input as the body information.

The attitude information about the work section 400 can be derived from the amount of lever operation performed by the operator and defined as the moment of inertia of the swing structure 402 in accordance with the amounts of operations performed relative to the boom, arm, and bucket.

Measured applied load is input as the load.

The controller 17 is connected to the engine controller (not shown), a motor controller (not shown), and a battery controller (not shown) through communication means to determine the flow of energy and control the engine 10, the motor-generator (M/G) 8, the AC motor 35, and the power supply system 1 in accordance with various parameters such as the amount of operation performed by the operator, the electrical storage status of the power supply system 1, and the body information.

The present embodiment has been described on the assumption that a hydraulic excavator is a representative example of the construction machine. However, the present invention is also applicable to industrial vehicles and construction machines, which have an internal combustion engine (engine) and a power supply system. More specifically, the present invention can be applied not only to a hydraulic excavator but also to a wheel loader, a forklift, and the like.

The present embodiment uses a power supply system that includes a battery (lead storage battery) and a capacitor. However, as the lead storage battery suffers a significant loss during charging, regenerative energy cannot be efficiently recovered into the lead storage battery. Therefore, if the lead storage battery is repeatedly charged and discharged with a large current, the lead storage battery tends to become increasingly degraded and shorten its life.

As such being the case, when the regenerative energy is to be charged into the power supply system 1, it is preferred that the capacitor 13 be charged wherever possible. This ensures that charging provides increased energy efficiency.

As described above, in a situation where the hydraulic excavator 2 repeatedly turns or the work section 400 repeatedly moves up and down to perform front work, the present embodiment exercises management so as to optimize the input and output of the capacitor 13.

Hence, the present embodiment grasps the status of the hydraulic excavator in advance, calculates the amount of energy, predicts the next operation, determines the amount of energy to be charged into the capacitor 13, and controls the DC-DC converters accordingly.

Consequently, the loss in the lead storage battery during regeneration can be reduced to provide increased energy efficiency.

Although the turning operation of the hydraulic excavator 2 has been described, the above is similarly applicable to traveling and excavating operations and to the other construction machines and industrial vehicles.

More specifically, the above is applicable, for instance, to forward and backward movements, earth loading operations, and loading and unloading operations of a wheel loader or to traveling and lifting operations of a forklift.

As the operations of the construction machines are definite unlike those of automobiles, it is possible to grasp the next operation in advance and exercise appropriate energy balance management.

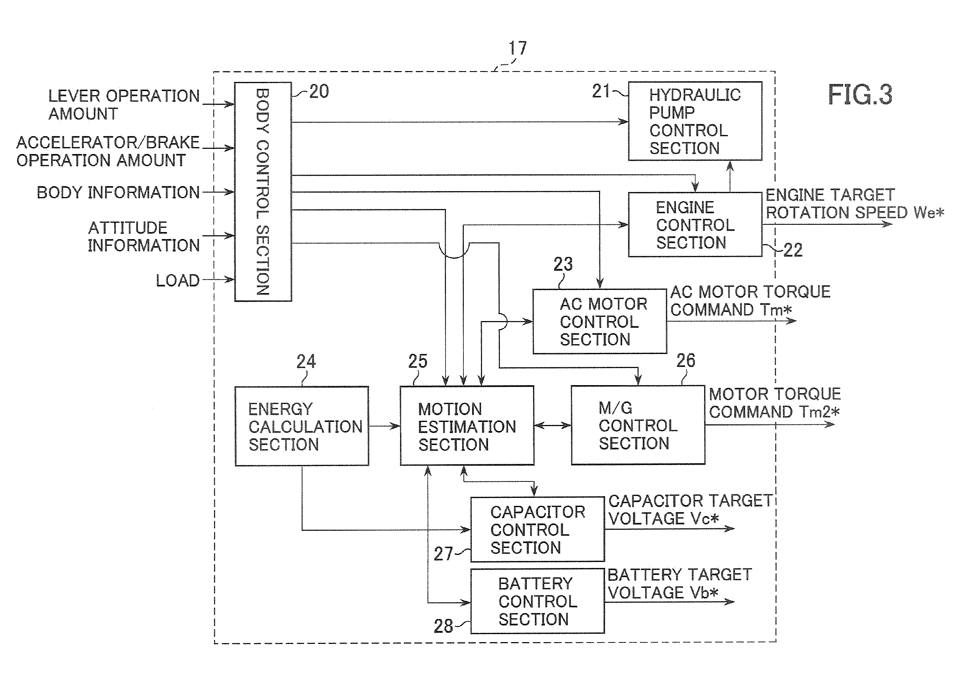

Fig. 3 is a schematic diagram illustrating the control logic of the controller 17.

The amounts of lever, accelerator, and brake operations, the body information, the attitude information, and the load are input into the controller 17 as input information.

The amounts of lever, accelerator, and brake operations are determined by a current operation performed by the operator at the cab seat 403. The body information includes the speed and acceleration of the travel structure 401. The information about the swing structure 402 includes the turning speed and the attitude information about a work section 400.

The attitude information about the work section 400 can be derived from the amount of lever operation performed by the operator and defined as the moment of inertia of the swing structure 402 in accordance with the amounts of operations performed relative to the boom, arm, and bucket.

Measured applied load is input as the load.

A body control section 20 uses the above items of input information to calculate outputs required for the hydraulic pump 31, the engine 10, the AC motor 35, and the motor-generator 26. These required outputs are used by a hydraulic pump control section 21, an engine control section 22, an AC motor control section 23, and an M/G (motor-generator) control section 26, respectively. In accordance with the outputs required for the aforementioned sections, the engine control section 22, the AC motor control section 23, and the M/G control section 26 set an engine target rotation speed We*, an AC motor torque command Tm*, and a motor torque command Tm2*, respectively, to drive the respective sections.

An energy calculation section 24 calculates the amount of electrical power (regenerative energy) to be regenerated from the motor-generator (M/G) 8 and the AC motor 35.

The way of determining the regenerative energy for the swing structure 402 will now be described.

The energy calculation section 24 calculates the sum of the potential energy Ep and kinetic energy Ev possessed by the hydraulic excavator 2 as the regenerative energy.

The current operation by the operator, body information, and load that are input into the controller 17 are used for the potential energy Ep and kinetic energy Ev.

The kinetic energy $Ev_1$ for the swing structure 402 can be calculated from a turning speed ωm [rad/s] by using Equation (1) below.

$$Ev_1 \; = \; (1/2) \; \times \; I_1 \; \times \; \omega m^2 \; --- \; (1)$$

$I_1$ is the moment of inertia. The moment of inertia varies with the attitude of a front section of the hydraulic excavator that prevails during turning. Therefore, the amounts of lever operations relative to the boom 405, the arm 406, and the bucket 407 or the moment of inertia appropriate for pilot pressure should be defined in advance.

Similarly, the kinetic energy provided by the rotation of the engine 10 can be calculated from an engine rotation speed ωe [rad/s] by using the following equation.

$$Ev_2 \; = \; K_2 \; \times \; (1/2) \; \times \; I_2 \; \times \; \omega e^2 \; --- \; (2)$$

$I_2$ is the moment of inertia of the engine and $K_2$ is a predetermined constant. $K_2$ is determined in accordance, for instance, with the rotation speed of the engine 10 that prevailed Δt [s] earlier or with a boost pressure.

Hence, the kinetic energy Ev is calculated by adding $Ev_1$ to $Ev_2$ ($Ev = Ev_1 + Ev_2$).

The potential energy Ep can be calculated from Equation (3) below.

$$Ep \; = \; K_3 \; \times \; St \; --- \; (3)$$

St is the stroke [m] of the boom and arm that is required for regeneration in the front section. $K_3$ is a predetermined constant.

The sum of the potential energy Ep and kinetic energy Ev, which have been calculated as described above, is calculated as energy E. The energy E is regarded as the amount of electrical power to be regenerated.

In reality, the amount of electrical power to be regenerated is mostly covered by the energy provided by the AC motor 35.

The rotation speeds and command values set by the body control section 20, the information about the amounts of electrical power requested by various sections, and the regenerative energy calculated by the energy calculation section 24, which have been described above, are input into an motion estimation section 25.

In accordance with the aforementioned items of information, the motion estimation section 25 estimates the next motions of the hydraulic excavator's travel structure 401, front work device 32, and swing structure 402.

In general, the work pattern of a construction machine, such as the hydraulic excavator 2, is basically predetermined. Therefore, the next operation can be easily estimated from the current operation. As regards the travel structure 401, for example, if the operator performs such an operation as to increase a vehicle speed, it is estimated that the next operation will be performed to decrease the vehicle speed. As regards the work section 400, if the operator performs such an operation as to raise the bucket 407, it is estimated that the next operation will be performed to lower the bucket 407. Further, when the swing structure 402 turns to perform a power running operation, it is estimated that the next operation will be performed to decrease the speed of turning. In the present embodiment, it is particularly preferred that the next operation of the swing structure 402 be estimated.

Although the present embodiment is described on the assumption that the swing structure 402 is electrified, the present invention is also applicable to a case where the travel structure 401 and front work device 32 are electrified.

As regards the travel structure 401, for instance, travel-induced kinetic energy Ev (= $1/2 \times m \times v_2$) can be calculated from speed v [m/s]. When, for instance, the boom in the front work device 32 is electrified, the amount of electrical power to be regenerated can be determined by calculating the potential energy, for example, from the weight m [g] of earth placed in the bucket and from the height h [m] derived from the attitude information about the work section 400.

The amount of electrical power to be regenerated, which is calculated as described above, is input into the motion estimation section 25 to estimate the current operation by the operator and next motion. A capacitor control section 27, which charges the capacitor 13 without overcharging, sets a target voltage for the capacitor 13.

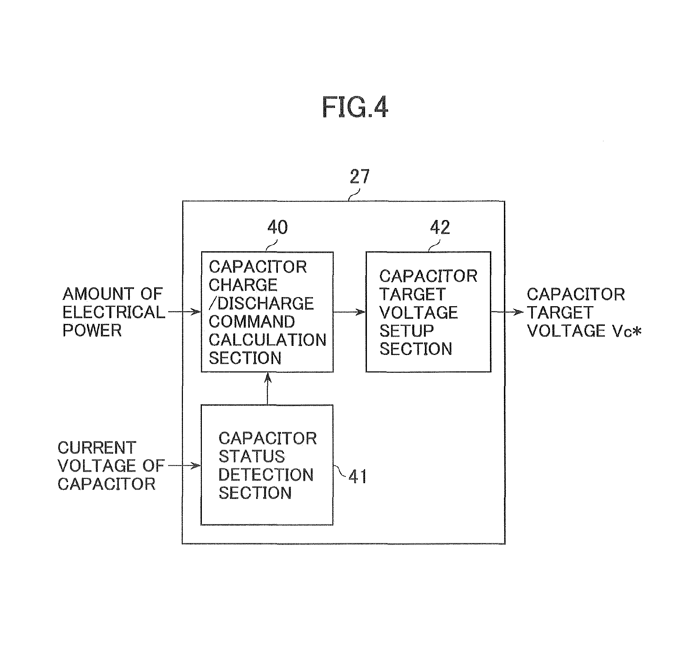

The way of setting a capacitor target voltage will now be described with reference to Fig. 4.

Fig. 4 is a diagram illustrating the control logic of the capacitor control section.

As shown in Fig. 4, the capacitor control section 27 includes a capacitor charge/discharge command calculation section 40, a capacitor status detection section 41, and a capacitor target voltage setup section 42.

The capacitor status detection section 41 detects a current capacitor voltage, that is, the current voltage $v_0$ of the capacitor.

The current voltage $V_0$ detected by the capacitor status detection section 41 and the regenerative energy calculated by the energy calculation section 24 are input into the capacitor charge/discharge command calculation section 40. The capacitor charge/discharge command calculation section 40 then calculates a discharge command for the capacitor.

The capacitor target voltage setup section 42 determines the capacitor target voltage $V_c{}^*$ in accordance with the discharge command calculated as described above.

The discharge command for the capacitor, which is calculated by the capacitor charge/discharge command calculation section 40, depends on the amount of electrical power calculated by the energy calculation section 24.

If, for example, the amount of electrical power is large, a charge command value is decreased or the discharge command value is increased. The reason is that the capacitor needs to be discharged beforehand to increase its charge capacity in order for the regenerated electrical power to be efficiently charged into the capacitor.

In other words, a great discharge command value should be set so as to discharge the capacitor beforehand. If, for instance, the engine rotation speed $\omega e$ is high during power running, it can be estimated that a heavy-load operation is being performed. In addition, as the capacitor 13 cannot be charged, the charge command value is decreased. If a turbo engine is being used, the load status can be predicted while considering the boost pressure as a parameter.

If, on the contrary, the amount of electrical power is small, a capacitor charge/discharge command is output so as to increase the charge command value or decrease the discharge command value. When the amount of electrical power to be regenerated is small, the charge capacity of the capacitor need not be increased. Therefore, a small discharge command value should be set. If, for instance, the engine rotation speed $\omega e$ is low, that is, the calculated amount of electrical power is small, a small discharge command value should be set because the amount of regenerative power is small.

The capacitor target voltage setup section 42 sets the capacitor target voltage $V_c{}^*$ so that discharge occurs in compliance with the discharge command set by the capacitor charge/discharge command calculation section 40 as described above. The capacitor target voltage $V_c{}^*$ is calculated from the following equations by using the capacitor's current voltage $V_0$ detected by the capacitor status detection section 41 and using the kinetic energy Ev and potential energy Ep, which constitute the regenerative energy calculated by the energy calculation section 24.

$$V_c{}^* = V0 - E' \quad --- \quad (4)$$

$$E' = (Kp \times Ep + Kv \times Ev) \quad --- \quad (5)$$

Kp and Kv are predetermined constants.

As is obvious from Equation (4), control should be exercised to prepare for the next operation in such a manner that the capacitor target voltage $V_c{}^*$ decreases with an increase in the amount of electrical power calculated by the energy calculation section and increases with a decrease in the amount of energy.

The capacitor control section 27 may correct the capacitor target voltage $V_c$* in accordance with the engine target rotation speed We*, the AC motor torque command Tm*, and the motor torque command $T_{m2}$*.

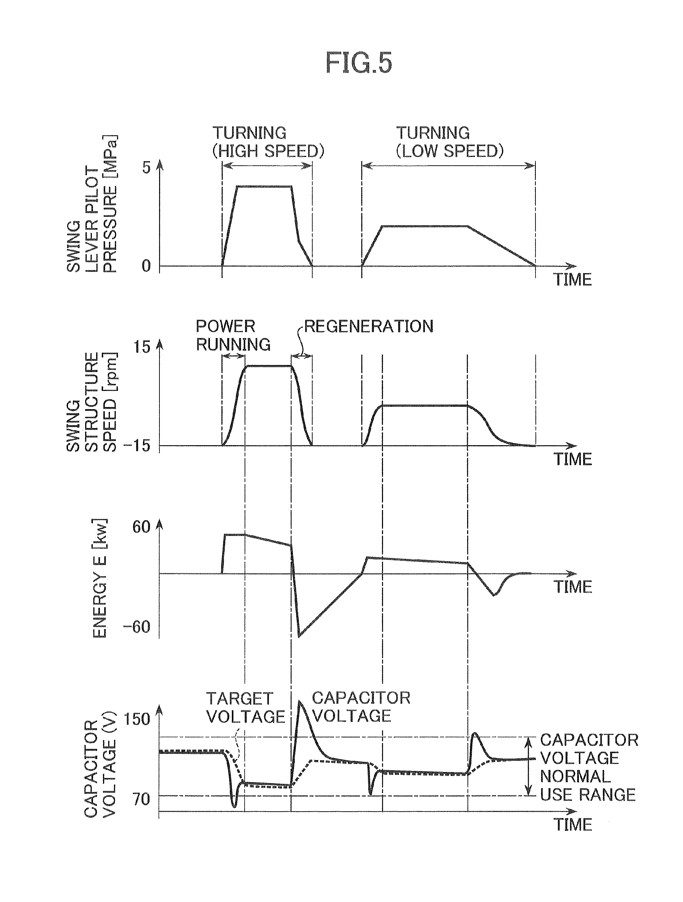

Fig. 5 is a diagram illustrating the relationship between swing lever pilot pressure, swing structure speed, energy E, capacitor voltage, and time.

Fig. 5 shows the relationship between the swing lever pilot pressure, swing structure speed, energy E, capacitor voltage, and time that prevails when the capacitor target voltage is controlled.

Referring to Fig. 5, when a swing lever is not operated, the kinetic energy is zero because the speed of the swing structure is zero. Therefore, the target voltage $V_c$* to be calculated from Equation (4) is set to be relatively high. When the swing lever is operated to maximize the swing lever pilot pressure, the speed of the swing structure increases accordingly. Thus, the kinetic energy in this instance is increased to decrease the target voltage $V_c$*. As regards the value of the target voltage, the constant Kv in Equation (5) should be preset in compliance with the actual specifications for the hydraulic excavator and in accordance with the maximum rotation speed of the swing structure and with the maximum torque that can be output.

As the swing structure is turning at the maximum speed, the swing structure decelerates when the swing lever is returned to neutral. When deceleration occurs, an output is generated in accordance with the kinetic energy to increase the target voltage $V_c$* for the capacitor.

The above explanation applies to a case where the swing lever is operated to maximize the turning speed. However, the same also applies to a case where the turning speed is low. When the turning speed is low, the kinetic energy is low. Therefore, the value of the target voltage $V_c$* for the capacitor, which is calculated from Equation (4), changes accordingly. In the case of a power running operation, the value of the target voltage $V_c$* is increased. However, it is set to be lower than for the first turning operation shown in Fig. 5. As the speed of the second turning operation is low, the amount of energy that can be regenerated is small when the swing lever is returned to neutral to perform a regeneration operation.

Meanwhile, as for a battery control section 28 shown in Fig. 3, a battery target voltage $V_b$* is preset so that the SOC of the battery approaches to zero at the end of an operation of the construction machine. Therefore, the battery target voltage $V_b$* for the battery 12 is controlled by merely discharging the battery 12 in accordance with the preset battery target voltage $V_b$* and without regard to the amount of electrical power to be regenerated, which is calculated by the energy calculation section.

Meanwhile, as the capacitor 13 is controlled in accordance with a preselected capacitor target voltage $V_c$* as mentioned earlier, the present invention discharges the capacitor 13 in advance. This control process is performed to control the capacitor voltage and will now be described with reference to Fig. 3.

The motion estimation section 25 exercises control so that the amount of electrical power to be discharged to obtain the capacitor target voltage $V_c$*, which is set by the capacitor target voltage setup section 42, is preferentially discharged to the AC motor 35. In this instance, the discharge occurs to provide an output requested by each section, which is calculated by the body control section 20, and the motion estimation section 25 determines a power flow, that is, the flow of electrical power supply to each section.

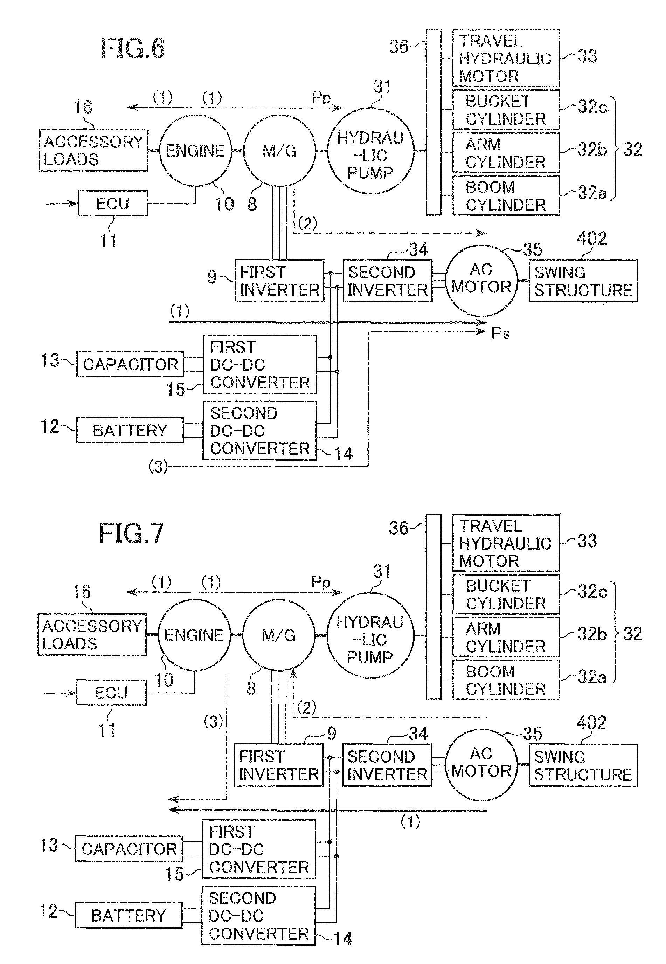

Fig. 6 shows that the electrical power stored in the capacitor is preferentially discharged to the AC motor 35 in accordance with power flows, which are determined by the motion estimation section 25, when a power running operation is performed by a swing section including the swing structure 402, the AC motor 35, and the second inverter 34.

When the amount of electrical power to be discharged from the capacitor 13 covers the entire power Ps required by the swing section, various sections are controlled in accordance with a power flow indicated by (1).

If the entire energy cannot be provided by the capacitor 13 due, for instance, to a low voltage of the capacitor 13, the electrical power generated by the motor-generator (M/G) 8 can also be used in accordance with power flows indicated by (1) and (2).

Further, if, in the battery control section 28, the battery is in a high SOC or the output of the engine is insufficient, control may be exercised to drive the AC motor 35 by using battery power in accordance with a power flow indicated by (3).

All the above-mentioned power flows are based on the status of the capacitor 13 and of the battery 12. As described earlier, decision is made so as to comply with charge/discharge command values calculated by the capacitor control section 27 and the battery control section 28.

The electrical power to be supplied to various sections is controlled in accordance with the power flows determined as described above. Accordingly, a torque command for the motor-generator (M/G) 8 and a torque command for the AC motor 35 are issued.

Exemplary power flows for a case where the capacitor is to be charged, as described above, with electrical power regenerated from the swing section and from the motor-generator after the capacitor 13 is discharged in advance will now be described with reference to Fig. 7.

When the capacitor 13 can be charged, the various sections are controlled in accordance with a power flow indicated by (1). However, when a swing section power running operation is being performed, front work may be performed together with a turning operation as a composite operation. If, in such an instance, the amount of electrical power regenerated by turning is large relative to a charge command for the capacitor, such electrical power may be used as the output of the pump 31 by driving the motor-generator (M/G) 8 to assist the engine with energy regenerated by a swing motor in accordance with power flows indicated by (1) and (2).

Further, if the charge command is output due to a low charge state of the capacitor 13, the electrical power generated by the motor-generator (M/G) 8 can also be used in accordance with power flows indicated by (1) and (3). In each case, the power flows are determined in such a manner that the capacitor target voltage $V_c{}^*$ for the capacitor is obtained.

The foregoing description deals with a case where a swing structure power running operation or a regeneration operation is performed. However, the method of control provided by the power supply system 1 according to the present embodiment is also applicable to a case where the other operations, such as a traveling operation and a front section boom operation, are electrified.

The present invention relates to a construction machine having an engine and a power supply system and is applicable, for instance, to a hydraulic excavator, a wheel loader, and a forklift.

Description of Reference Numerals

| | |
|---|---|
| 1 | Power supply system |
| 8 | Motor generator (M/G) |
| 9 | First inverter |
| 10 | Engine |
| 12 | Battery |
| 13 | Capacitor |
| 14 | Second DC-DC converter |
| 15 | First DC-DC converter |
| 17 | Controller |
| 32 | Front work device |
| 33 | Travel hydraulic motor |
| 34 | Second inverter |
| 35 | AC motor |
| 36 | Control valve |
| 400 | Work section |
| 402 | Swing structure |

**Claims**

1. A construction machine comprising:

an engine;
a hydraulic pump that is driven by the engine;
a motor-generator that is coupled to the engine and to the hydraulic pump and capable of generating electrical power;
a hydraulic work device that is driven by a hydraulic fluid discharged from the hydraulic pump;
a swing structure on which the hydraulic work device is mounted;
an AC motor that drives the swing structure;
a power supply system having a capacitor that supplies electrical power to the motor-generator and/or to the AC motor and that becomes charged with electrical power regenerated by the motor-generator and/or by the AC motor; and
a controller that controls the power supply system;
wherein the controller includes

an motion estimation section that estimates the next motion of the hydraulic work device and/or the swing structure in accordance with the current operation performed by an operator,
an energy calculation section that calculates the amount of electrical power to be regenerated by the motor-generator and/or by the AC motor, in accordance with the estimated next operation, and

a capacitor control section that sets a target voltage for the capacitor in accordance with the calculated amount of electrical power.

2. The construction machine according to claim 1, wherein the capacitor control section includes a capacitor status detection section that detects the current voltage of the capacitor, a capacitor charge/discharge command calculation section that calculates a charge/discharge command for the capacitor in accordance with the calculated amount of electrical power and with the detected current voltage, and a capacitor target voltage setup section that sets a target voltage for the capacitor in accordance with the calculated charge/discharge command.

3. The construction machine according to claim 1, wherein the capacitor control section corrects the target voltage for the capacitor in accordance with the rotation speed of the engine, a torque command for the AC motor, and/or a torque command for the motor-generator.

4. The construction machine according to claim 1, wherein the controller includes a body control section that calculates the amount of electrical power to be requested from the swing structure in accordance with the current operation performed by the operator.

5. A construction machine comprising:

a power supply system having a capacitor that supplies electrical power to an AC motor for driving a swing structure and that becomes charged with electrical power regenerated by a motor-generator and/or by the AC motor, the swing structure being a structure on which the motor-generator and/or a hydraulic work device are mounted, the motor-generator being coupled to an engine and to a hydraulic pump and capable of generating electrical power, the hydraulic work device being driven by a hydraulic fluid discharged from the hydraulic pump; and
a controller that controls the power supply system;
wherein the controller estimates the next operation of the hydraulic work device and/or the swing structure in accordance with the current operation performed by an operator, calculates the amount of electrical power to be regenerated by the motor-generator and/or by the AC motor in accordance with the estimated next operation, and sets a target voltage for the capacitor in accordance with the calculated amount of electrical power.

6. The construction machine according to claim 5,
wherein the controller calculates a charge/discharge command for the capacitor in accordance with the calculated amount of electrical power and sets the target voltage for the capacitor in accordance with the calculated charge/discharge command.

7. The construction machine according to claim 5,
wherein the controller calculates the amount of electrical power in accordance with the rotation speed of the AC motor.

8. The construction machine according to claim 5,
wherein the controller compares the current voltage of a capacitor to the target voltage for the capacitor, and if the current voltage of the capacitor is higher than the target voltage for the capacitor, supplies electrical power stored in the capacitor to the AC motor that drives the swing structure.

**Amended claims under Art. 19.1 PCT**

1. (Amended) A construction machine comprising:

an engine;
a hydraulic pump that is driven by the engine;
a motor-generator that is coupled to the engine and to the hydraulic pump and capable of generating electrical power;
a hydraulic work device that is driven by a hydraulic fluid discharged from the hydraulic pump;
a swing structure on which the hydraulic work device is mounted;
an AC motor that drives the swing structure;
a power supply system having a capacitor that supplies electrical power to the motor-generator and/or to the AC motor and that becomes charged with electrical power regenerated by the motor-generator and/or by the AC motor; and
a controller that controls the power supply system;
wherein the controller includes

an motion estimation section that estimates the next motion of the hydraulic work device and/or the swing structure in accordance with the current operation performed by an operator,
an energy calculation section that calculates the amount of electrical power to be regenerated by the motor-generator and/or by the AC motor, in accordance with the estimated next operation, and
a capacitor control section that sets a target voltage for the capacitor in accordance with the difference between the calculated amount of electrical power and the current voltage of the capacitor.

**2.** (Amended) The construction machine according to claim 1, wherein the capacitor control section includes a capacitor status detection section that detects the current voltage of the capacitor, a capacitor charge/discharge command calculation section that calculates a charge/discharge command for the capacitor in accordance with the difference between the calculated amount of electrical power and the detected current voltage, and a capacitor target voltage setup section that sets a target voltage for the capacitor in accordance with the calculated charge/discharge command.

**3.** The construction machine according to claim 1,
wherein the capacitor control section corrects the target voltage for the capacitor in accordance with the rotation speed of the engine, a torque command for the AC motor, and/or a torque command for the motor-generator.

**4.** The construction machine according to claim 1,
wherein the controller includes a body control section that calculates the amount of electrical power to be requested from the swing structure in accordance with the current operation performed by the operator.

**5.** (Amended) A construction machine comprising:

a power supply system having a capacitor that supplies electrical power to an AC motor for driving a swing structure and that becomes charged with electrical power regenerated by a motor-generator and/or by the AC motor, the swing structure being a structure on which the motor-generator and/or a hydraulic work device are mounted, the motor-generator being coupled to an engine and to a hydraulic pump and capable of generating electrical power, the hydraulic work device being driven by a hydraulic fluid discharged from the hydraulic pump; and
a controller that controls the power supply system;
wherein the controller estimates the next operation of the hydraulic work device and/or the swing structure in accordance with the current operation performed by an operator, calculates the amount of electrical power to be regenerated by the motor-generator and/or by the AC motor in accordance with the estimated next operation, and sets a target voltage for the capacitor in accordance with the difference between the calculated amount of electrical power and the current voltage of the capacitor.

**6.** The construction machine according to claim 5,
wherein the controller calculates a charge/discharge command for the capacitor in accordance with the calculated amount of electrical power and sets the target voltage for the capacitor in accordance with the calculated charge/discharge command.

**7.** The construction machine according to claim 5,
wherein the controller calculates the amount of electrical power in accordance with the rotation speed of the AC motor.

**8.** (Amended) The construction machine according to claim 5, wherein the controller compares the current voltage of the capacitor to the target voltage for the capacitor, and if the current voltage of the capacitor is higher than the target voltage for the capacitor, supplies electrical power stored in the capacitor to the AC motor that drives the swing structure.

**Statement under Art. 19.1 PCT**

Claims 1 and 5 are amended to clearly state that the target voltage for the capacitor is set on the basis of "difference between the amount of electrical power and the current voltage of the capacitor". Document 1 does not disclose that the target voltage for the capacitor is set in such a manner.

Claim 2 is amended according to the content that falls within the range of the amended claim 1.

Claim 8 is amended so that omitted letters in the original claim 8 may be newly added.

## FIG.1

## FIG.2

CONTROLLER ← LEVER OPERATION AMOUNT
← ACCELERATOR/BRAKE OPERATION AMOUNT
← BODY INFORMATION
← ATTITUDE INFORMATION
← LOAD

FIG.3

LEVER OPERATION AMOUNT →

ACCELERATOR/BRAKE OPERATION AMOUNT →

BODY INFORMATION →

ATTITUDE INFORMATION →

LOAD →

BODY CONTROL SECTION ~20

HYDRAULIC PUMP CONTROL SECTION ~21

ENGINE CONTROL SECTION ~22
→ ENGINE TARGET ROTATION SPEED We*

AC MOTOR CONTROL SECTION 23
→ AC MOTOR TORQUE COMMAND Tm*

ENERGY CALCULATION SECTION 24

MOTION ESTIMATION SECTION 25

M/G CONTROL SECTION 26
→ MOTOR TORQUE COMMAND Tm2*

CAPACITOR CONTROL SECTION 27
→ CAPACITOR TARGET VOLTAGE Vc*

BATTERY CONTROL SECTION 28
→ BATTERY TARGET VOLTAGE Vb*

17

# FIG.4

27

40

42

AMOUNT OF
ELECTRICAL
POWER

CAPACITOR
CHARGE
/DISCHARGE
COMMAND
CALCULATION
SECTION

CAPACITOR
TARGET
VOLTAGE
SETUP
SECTION

CAPACITOR
TARGET
VOLTAGE Vc*

CURRENT
VOLTAGE OF
CAPACITOR

CAPACITOR
STATUS
DETECTION
SECTION

41

# FIG.5

EP 2 628 857 A1

# FIG.6

# FIG.7

18

<table>
<tr><td colspan="2" align="center">**INTERNATIONAL SEARCH REPORT**</td><td>International application No.<br>PCT/JP2011/072892</td></tr>
</table>

A. CLASSIFICATION OF SUBJECT MATTER
*E02F9/20(2006.01)i, H02J7/34(2006.01)i*

According to International Patent Classification (IPC) or to both national classification and IPC

B. FIELDS SEARCHED

Minimum documentation searched (classification system followed by classification symbols)
E02F9/20, H02J7/34

Documentation searched other than minimum documentation to the extent that such documents are included in the fields searched
Jitsuyo Shinan Koho          1922-1996   Jitsuyo Shinan Toroku Koho   1996-2011
Kokai Jitsuyo Shinan Koho    1971-2011   Toroku Jitsuyo Shinan Koho   1994-2011

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2010/114036 A1 (Hitachi Construction Machinery Co., Ltd.), 07 October 2010 (07.10.2010), paragraphs [0020] to [0090]; fig. 2 to 5 & WO 2010/114036 A1 | 1-8 |

☐ Further documents are listed in the continuation of Box C.   ☐ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
27 December, 2011 (27.12.11)

Date of mailing of the international search report
10 January, 2012 (10.01.12)

Name and mailing address of the ISA/
Japanese Patent Office

Authorized officer

Facsimile No.

Telephone No.

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9224302 A
- JP 11164402 A
- JP 2002359935 A